# EUROPÄISCHE PATENTANMELDUNG

(11) **EP 4 738 069 A1**
(43) Veröffentlichungstag der Anmeldung: **06.05.2026**
(21) Anmeldenummer: 24217028.0
(22) Anmeldetag: 03.12.2024
(51) Int. Cl.: G06F 3/01, G06F 40/58

(54) **VERFAHREN ZUR AUSGABE EINES AUSZUSPRECHENDEN INHALTS DURCH EINEN AVATAR**

(30) Priorität: 04.11.2024 EP 24210653
(71) Anmelder: goAVA GmbH, 45133 Essen (DE)
(72) Erfinder: SCHELLENBERG, Jan, 19055 Schwerin (DE)
(74) Vertreter: Von Rohr Patentanwälte Partnerschaft mbB

(57) **Zusammenfassung**

Es wird ein Verfahren zur akustischen und insbesondere visuellen Ausgabe eines auszusprechenden Inhalts durch einen Avatar vorgeschlagen, wobei eine Eingabe durch einen Nutzer erfolgt und als Reaktion darauf ein auszusprechender Inhalt erzeugt und durch den Avatar ausgegeben wird. Die Eingabe wird an wenigstens zwei voneinander unabhängige Servereinheiten gesendet. Jede Servereinheit bestimmt eine Übereinstimmung der Eingabe mit jeweils einer der Servereinheit zugeordneten Sprache. Des Weiteren werden eine Vorrichtung, ein Computerprogramm und ein computerlesbarer Datenträger zur Durchführung des vorschlagsgemäßen Verfahrens vorgeschlagen.

## Beschreibung

Die vorliegende Erfindung betrifft ein Verfahren zur akustischen und insbesondere visuellen Ausgabe eines auszusprechenden Inhalts durch einen Avatar gemäß dem Oberbegriff von Anspruch 1, eine Vorrichtung zur Datenverarbeitung, ein Computerprogramm und einen computerlesbaren Datenträger.

Bei üblichen Verfahren wird zu Beginn einer Konversation von einem Nutzer eine Sprache ausgewählt, in welcher der Nutzer mit dem Avatar kommunizieren möchte. Die Auswahl kann dabei mittels einem der Konversation vorgeschalteten Menü erfolgen. Möchte der Nutzer in einer anderen Sprache mit dem Avatar kommunizieren, so muss der Benutzer die Konversation mit dem Avatar verlassen bzw. beenden und über das vorgeschaltete Menü eine andere Sprache auswählen.

Ein Sprachwechsel während der laufenden Kommunikation ist somit aufwendig und führt dazu, dass ein Bruch in der Kommunikation mit dem Avatar stattfindet. Eine entsprechende Unterbrechung wird von Nutzern als störend und unnatürlich empfunden. Insbesondere bei einer Konversation von mehreren Personen mit einem Avatar, wobei die Personen unterschiedliche Sprachen sprechen, kann der erforderliche Sprachenwechsel zu einer lang andauernden Kommunikation und einem umständlichen Kommunikationsablauf führen.

Es sind auch Verfahren bekannt, bei denen eine Spracherkennung, insbesondere mittels eines gemeinsamen Sprachmoduls, erfolgt. Dabei muss zunächst die Sprache der akustischen Eingabe bestimmt werden. Es werden in der Regel wenigstens acht bis zwölf gesprochene Wörter benötigt, um die Sprache zuverlässig bestimmen zu können. Erst nach der Identifizierung der Sprache kann die erfolgte sprachliche Eingabe durch den Nutzer inhaltlich analysiert werden. Entsprechend kann zwischen der Eingabe durch den Nutzer und der Ausgabe des auszusprechenden Inhalts ein langer Zeitversatz entstehen, der von Nutzern als unangenehm und unnatürlich empfunden wird.

Der vorliegenden Erfindung liegt die Aufgabe zugrunde, ein im Vergleich zum Stand der Technik verbessertes Verfahren zur akustischen und insbesondere visuellen Ausgabe eines auszusprechenden Inhalts durch einen Avatar bereitzustellen, wobei eine besonders komfortable und natürlich wirkende Konversation mit dem Avatar ermöglicht wird, wobei eine besonders einfache, benutzerfreundliche und/oder intuitive Kommunikation geschaffen oder unterstützt wird.

Die der vorliegenden Erfindung zugrunde liegende Aufgabe wird durch das Verfahren gemäß Anspruch 1, das System zur Datenverarbeitung gemäß Anspruch 13, das Computerprogramm gemäß Anspruch 14 und den computerlesbaren Datenträger gemäß Anspruch 15 gelöst.

Die vorliegende Erfindung betrifft ein, insbesondere computerimplementiertes, Verfahren zur akustischen und insbesondere visuellen Ausgabe eines auszusprechenden Inhalts durch einen Avatar.

Unter dem Begriff "Avatar" sind im Rahmen der vorliegenden Erfindung digitale Wesen mit anthropomorphem Aussehen zu verstehen, die von Menschen oder Software gesteuert werden und die Fähigkeit besitzen, zu interagieren.

Vorzugsweise wird bzw. werden das vorschlagsgemäße Verfahren, insbesondere einzelne oder alle Verfahrensschritte des vorschlagsgemäßen Verfahrens, mittels eines Systems zur Datenverarbeitung (teil-)automatisch bzw. selbsttätig durchgeführt, insbesondere durch entsprechende Mittel zur Datenverarbeitung und Steuerung der Vorrichtung, wie eine Datenverarbeitungseinrichtung oder dergleichen.

Bei dem vorschlagsgemäßen Verfahren zur akustischen und insbesondere visuellen Ausgabe eines auszusprechenden Inhalts durch einen Avatar erfolgt zunächst eine Eingabe durch einen Nutzer. Der auszusprechende Inhalt wird anschließend als Reaktion auf die Eingabe erzeugt und durch den Avatar ausgegeben.

Wesentlich ist die grundsätzliche Überlegung, die Eingabe des Nutzers an verschiedene Sprachmodule zu übertragen und die Eingabe mit jeder dieser Sprachen zu vergleichen. Es ist dann möglich, die Sprache der Eingabe anhand der ermittelten Übereinstimmung mit den jeweiligen Sprachen zu bestimmen. Auf diese Weise kann dann das Sprachmodul zur Erzeugung des auszusprechenden Inhalts ausgewählt und verwendet werden, dass die höchste Übereinstimmung mit der Sprache der Eingabe aufweist. Da jedem Sprachmodul lediglich eine Sprache zugeordnet ist, kann die Analyse bzw. Bestimmung des Inhalts der Eingabe mit dem Beginn der Eingabe durch den Nutzer starten. Insbesondere kann die Analyse des Inhalts zeitgleich zur Bestimmung der Sprache durchgeführt werden. Da lediglich das Sprachmodul mit der höchsten Übereinstimmung zur Erzeugung des auszusprechenden Inhalts verwendet wird, kann ein bestmöglich passender auszusprechender Inhalt in besonders kurzer Zeit erzeugt werden. Erfolgt im Anschluss an die Ausgabe des auszusprechenden Inhalts eine neue Eingabe des Nutzers in einer anderen Sprache, so kann in besonders einfacher Weise die Sprache der neuen Eingabe erkannt und ein auszusprechender Inhalt in der entsprechenden Sprache erzeugt werden. Der Avatar ist dadurch in Lage, während einer Kommunikation unterschiedliche Sprachen zu verstehen und in der jeweiligen Sprache zu antworten, wodurch der Komfort für den Nutzer erhöht und eine besonders natürlich wirkende Konversation mit dem Avatar ermöglicht wird.

Im Einzelnen wird vorgeschlagen, dass die Eingabe des Nutzers an wenigstens zwei voneinander unabhängige Servereinheiten gesendet wird, wobei von jeder Servereinheit eine Übereinstimmung der Eingabe mit jeweils einer der Servereinheit zugeordneten Sprache bestimmt wird. Auf diese Weise kann durch die Auswahl der Servereinheiten die Anzahl der für die Kommunikation zur Verfügung stehenden Sprachen vorgegeben und die Auswahl der zur Verfügung stehenden Sprachen erfolgen. Es ist dann in besonders einfacher Weise möglich, während der Kommunikation beliebig zwischen den Sprachen zu wechseln.

Unter dem Begriff "Servereinheit" ist im Rahmen der vorliegenden Erfindung ein Computerprogramm oder ein Gerät zu verstehen, welches Funktionalitäten, Dienstprogramme, Daten oder andere Ressourcen bereitstellt, damit andere Geräte oder Programme darauf zugreifen können, insbesondere über ein Netzwerk.

Insbesondere ist vorgesehen, dass die Eingabe gleichzeitig an die Servereinheiten gesendet wird, wodurch ein besonders zeiteffizientes Verfahren realisiert wird.

Gemäß einer bevorzugten Ausführungsform ist jeder Servereinheit jeweils eine von den anderen Servereinheiten unterschiedliche Sprache zugeordnet. Auf diese Weise kann auf jeder Servereinheit ein anderes Sprachmodul gespeichert sein. Mittels jeder Servereinheit kann somit jeweils ein anderes Sprachmodul verarbeitet werden, wodurch eine besonders hohe technische Effizienz erreicht werden kann.

Die Eingabe durch den Nutzer sowie die Ausgabe des auszusprechenden Inhalts durch den Avatar erfolgt vorzugsweise mittels eines Ein- und Ausgabegeräts, wodurch die Kommunikation mit dem Avatar an beliebigen Orten stattfinden kann.

Besonders bevorzugt erfolgt die Bestimmung der Übereinstimmung mit den jeweiligen Sprachen zumindest im Wesentlichen gleichzeitig, wodurch ein besonders zeiteffizientes Verfahren geschaffen wird.

Gemäß einer weiter bevorzugten Ausführungsform werden die Übereinstimmungen mit den jeweiligen Sprachen miteinander verglichen und die Servereinheit mit der größten Übereinstimmung mit der ihr zugeordneten Sprache als Antwortservereinheit zur Erzeugung des auszusprechenden Inhalts bestimmt. Es ist dann sichergestellt, dass der auszusprechende Inhalt in der Sprache erzeugt werden kann, welche die höchste Übereinstimmung mit der Sprache der Eingabe aufweist.

Alternativ oder zusätzlich kann nach dem Vergleich der Übereinstimmungen bei einer zumindest im Wesentlichen gleichgroßen Übereinstimmung bei wenigstens zwei Servereinheiten eine Servereinheit davon als Antwortservereinheit in Abhängigkeit eines zusätzlichen Einflussfaktors bestimmt werden. So kann der Einflussfaktor beispielsweise die Sprache der vorhergehenden Eingabe und/oder des vorhergehenden auszusprechenden Inhalts, die zu erwartende Sprache an dem Standort und/oder eine Wahrscheinlichkeit, das ein Nutzer einer Sprache mächtig ist, berücksichtigen.

Die ausgewählte bzw. bestimmte Antwortservereinheit wird insbesondere dazu verwendet, den auszusprechenden Inhalt zu erzeugen. Auf diese Weise wird der auszusprechende Inhalt in der Sprache der Eingabe erzeugt, wodurch die Reaktion bzw. Antwort durch den Avatar in derselben Sprache wie die Eingabe des Nutzers erfolgt.

In besonders vorteilhafter Weise kann die Antwortservereinheit dazu verwendet werden, den Eingabeinhalt der Eingabe des Nutzers anhand von Wörtern, Ausdrücken und/oder Synonymen zu analysieren. Die Analyse des Eingabeinhaltes kann vorzugsweise mittels eines Large Language Moduls erfolgen.

Unter dem Begriff "Large Language Modul" ist im Rahmen der vorliegenden Erfindung ein generatives Sprachmodell für Texte bzw. textbasierte Inhalte zu verstehen. Large Language Module verwenden künstliche Intelligenz, künstliche neuronale Netzwerke und/oder Deep Learning, um natürliche Sprache zu verarbeiten, zu verstehen und/oder gegebenenfalls zu generieren. Entsprechende Sprachmodelle werden verwendet, um komplexe Texte, Fragen und/oder Anweisungen zu verstehen.

Zwischen dem Ein- und Ausgabegerät und den Servereinheiten kann jeweils eine bidirektionale Verbindung aufgebaut und/oder aufrechterhalten werden.

Gemäß einer Ausführungsform wird die Eingabe des Nutzers über eine Vermittlereinheit an die Servereinheit gesendet. Es ist dann ausgehend von dem Ein- und Ausgabegerät lediglich eine bidirektionale Verbindung zur Vermittlereinheit notwendig, wodurch eine besonders hohe Performance des Ein- und Ausgabegeräts erreicht wird. Gleichzeitig können auch die technischen Anforderungen an das Ein- und Ausgabegerät verringert werden.

Insbesondere kann der auszusprechende Inhalt von der Antwortservereinheit über die Vermittlereinheit an das Ein- und Ausgabegerät gesendet werden. Auch ist dann zum Empfangen des auszusprechenden Inhalts lediglich eine bidirektionale Verbindung zwischen dem Ein- und Ausgabegerät und der Vermittlereinheit notwendig.

In vorteilhafter Weise kann zwischen der Vermittlereinheit und den Servereinheiten jeweils eine bidirektionale Verbindung aufgebaut und/oder aufrechterhalten werden.

Alternativ und zusätzlich kann zwischen dem Ein- und Ausgabegerät und der Vermittlereinheit eine bidirektionale Verbindung aufgebaut und/oder aufrechterhalten werden.

Der auszusprechende Inhalt kann aus einer Mehrzahl von vorgegebenen Inhaltsbausteinen ausgewählt und/oder generiert werden. Es ist dann möglich, lediglich inhaltlich kontrollierte bzw. freigegebene Inhaltsbausteinen zu verwenden, um die Ausgabe von objektiv falschen Informationen durch den Avatar zu vermeiden.

Alternativ oder zusätzlich kann der auszusprechende Inhalt mittels eines Large Language Moduls generiert werden, wodurch Antworten und/oder Reaktionen auf eine Vielzahl von Fragen und/oder Aussagen generiert werden können.

Zur Unterstützung der akustischen Ausgabe des auszusprechenden Inhalts werden vorzugsweise zum auszusprechenden Inhalt passende Lippenbewegungen des Avatars erzeugt und/oder synchronisiert.

Unter dem Begriff "Lippenbewegung" ist im Rahmen der vorliegenden Erfindung die Lippenbewegung und vorzugsweise die Mimik und/oder der Ausdruck des Gesichts des Avatars bei der Aussprache des Inhalts zu verstehen.

Vorzugsweise ist vorgesehen, dass wenigstens ein Verfahrensschritt mittels eines Computers durchgeführt wird.

Gemäß einem weiteren Aspekt der vorliegenden Erfindung wird ein System zur Datenverarbeitung umfassend Mittel zur Ausführung des vorschlagsgemäßen Verfahrens vorgeschlagen. Auf alle Ausführungen zum vorschlagsgemäßen Verfahren darf insoweit verwiesen werden. Insbesondere werden entsprechende Vorteile erzielt.

Gemäß einem weiteren Aspekt der vorliegenden Erfindung wird ein Computerprogramm, umfassend Befehle, die bei Ausführung des Computerprogramms durch einen Computer diesen veranlassen, ein vorschlagsgemäßes Verfahren auszuführen, vorgeschlagen. Auf alle Ausführungen zum vorschlagsgemäßen Verfahren darf insoweit verwiesen werden. Insbesondere werden entsprechende Vorteile erzielt.

Gemäß einem weiteren Aspekt der vorliegenden Erfindung wird ein, insbesondere nichtflüchtiger, computerlesbarer Datenträger, auf dem das vorschlagsgemäße Computerprogramm gespeichert ist, vorgeschlagen. Auf alle Ausführungen zum vorschlagsgemäßen Computerprogramm darf insoweit verwiesen werden. Insbesondere werden entsprechende Vorteile erzielt.

Die vorgenannten Aspekte, Merkmale und Verfahrensschritte sowie die sich aus den Ansprüchen und der nachfolgenden Beschreibung ergebenden Aspekte, Merkmale und Verfahrensschritte der vorliegenden Erfindung können grundsätzlich unabhängig voneinander, aber auch in beliebiger Kombination und/oder Reihenfolge realisiert werden.

Weitere Aspekte, Vorteile, Merkmale, Eigenschaften sowie vorteilhafte Weiterbildungen der vorliegenden Erfindung ergeben sich aus den Ansprüchen und der nachfolgenden Beschreibung bevorzugter Ausführungsformen anhand der Figuren. Es zeigen in schematischer, nicht maßstabsgetreuer Darstellung:
- Fig. 1: eine schematische Ansicht eines vorschlagsgemäßen Ein- und Ausgabegeräts zur Datenverarbeitung, die dazu ausgebildet ist, einen auszusprechenden Inhalt akustisch und visuell durch einen Avatar auszugeben,
- Fig. 2A: eine schematische Ansicht eines vorschlagsgemäßen Systems zur Datenverarbeitung zur akustischen und visuellen Ausgabe eines auszusprechenden Inhalts in verschiedenen Sprachen durch einen Avatar gemäß einer ersten Ausführungsform;
- Fig. 2B: eine schematische Ansicht eines vorschlagsgemäßen Systems zur Datenverarbeitung zur akustischen und visuellen Ausgabe eines auszusprechenden Inhalts in verschiedenen Sprachen durch einen Avatar gemäß einer zweiten Ausführungsform;
- Fig. 3: ein schematisches Ablaufdiagramm eines vorschlagsgemäßen Verfahrens zur akustischen und visuellen Ausgabe eines auszusprechenden Inhalts durch einen Avatar bzw. einzelner Verfahrensschritte des vorschlagsgemäßen Verfahrens.

In den teilweise nicht maßstabsgerechten, nur schematischen Figuren werden für gleiche, gleichartige oder ähnliche Bauteile und Komponenten dieselben Bezugszeichen verwendet, wobei entsprechende oder vergleichbare Eigenschaften oder Vorteile erreicht werden, auch wenn von einer Wiederholung abgesehen wird.

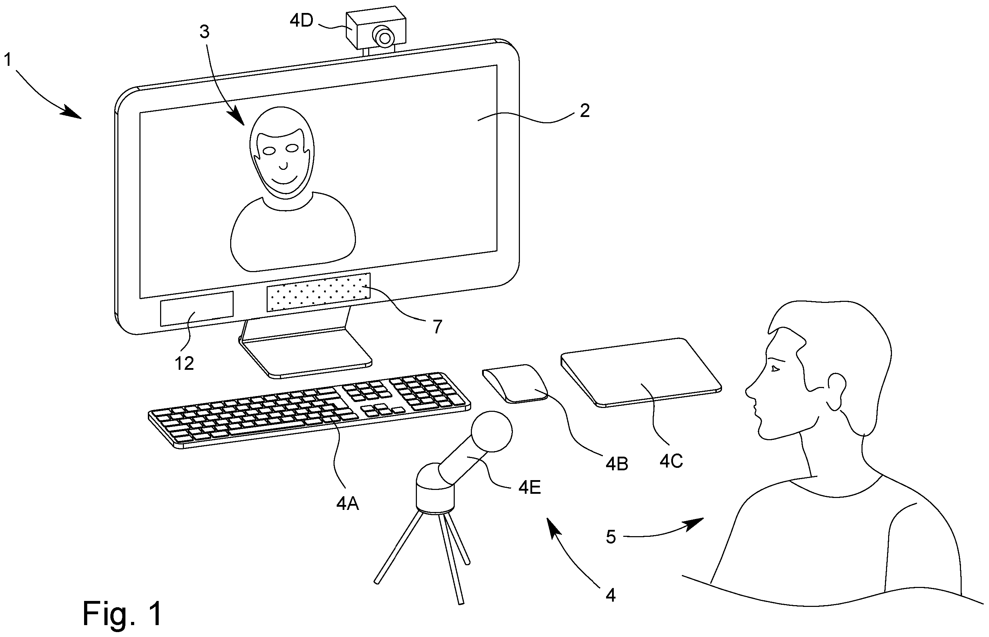

Fig. 1 zeigt eine schematische Ansicht einer Vorrichtung, insbesondere ein Ein- und Ausgabegerät 1, zur Datenverarbeitung, insbesondere einen Computer. Bei dem Ein- und Ausgabegerät 1 kann es sich auch um einen Laptop, ein Tablet, ein Mobiltelefon oder dergleichen handeln.

Das Ein- und Ausgabegerät 1 weist vorzugsweise eine visuelle Ausgabeeinrichtung, insbesondere Bildschirm 2, zur Anzeige bzw. Wiedergabe eines Avatars 3 auf. Der Bildschirm 2 ist insbesondere zur Wiedergabe von bewegten Bildern, insbesondere des Avatars 3, ausgebildet. Mittels des Bildschirms 2 können Bewegungen des Avatars 3 und insbesondere Bewegungen des Avatars 3 beim Sprechen, vorzugsweise ruckelfrei, dargestellt werden.

Des Weiteren weist das Ein- und Ausgabegerät 1 eine Eingabeeinrichtung 4 zur Eingabe eines Eingabeinhalts auf. Die Eingabeeinrichtung 4 kann integraler Bestandteil des Ein- und Ausgabegeräts 1 sein oder als separates Eingabegerät ausgebildet sein.

Die Eingabeeinrichtung 4 kann beispielsweise eine Tastatur 4A, eine Maus 4B, ein Touchpad/Trackpad 4C, eine Kamera 4D, ein Mikrofon 4E und/oder einen Touchscreen zur Eingabe des Eingabeinhalts aufweisen.

Beispielsweise kann das Mikrofon 4E in die Kamera 4D integriert sein. Es ist alternativ oder zusätzlich möglich, dass der Bildschirm 2 als Touchscreen ausgebildet oder ein Touchscreen in den Bildschirm 2 integriert ist.

Ein Nutzer 5 kann über die Eingabeeinrichtung 4 einen Eingabeinhalt eingeben. Bei dem Eingabeinhalt kann es sich insbesondere um eine akustische Eingabe handeln. Die akustische Eingabe kann insbesondere mittels des Mikrofons 4E erfolgen. So kann der Nutzer 5 beispielsweise eine Frage akustisch stellen oder akustisch um bestimmte Informationen bitten. Alternativ oder zusätzlich kann die Eingabe des Eingabeinhalts auch mittels der Tastatur 4A der Maus 4B, dem Touchpad/Trackpad 4C, der Kamera 4D und/oder dem Touchscreen erfolgen. Auch eine kombinierte akustische und motorische Eingabe mittels Mikrofon 4E und Tastatur 4A, Maus 4B, Touchpad 4C und/oder Touchscreen ist denkbar. Hier und vorzugsweise handelt es sich bei dem Eingabeinhalt um einen, insbesondere ausgesprochenen, Text.

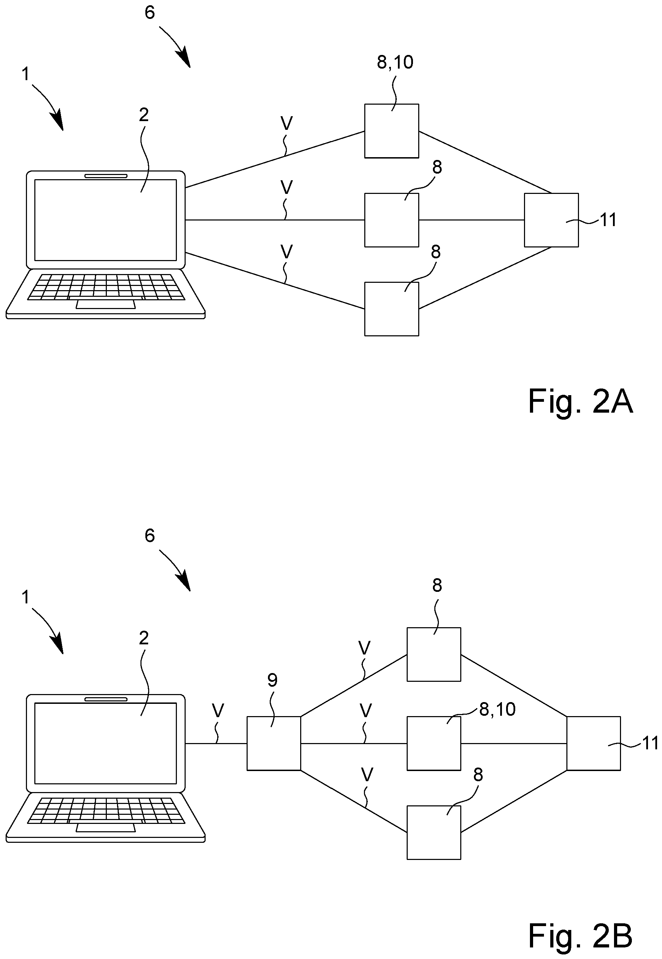

Das Ein- und Ausgabegerät 1 ist vorzugsweise Bestandteil eines in Fig. 2A und Fig. 2B gezeigten Systems 6 zur Datenverarbeitung, insbesondere zur Erzeugung eines auszusprechenden Inhalts als Reaktion auf die Eingabe des Nutzers. Fig. 2A zeigt ein erfindungsgemäßes System 6 gemäß einer ersten Ausführungsform und Fig. 2B gemäß einer zweiten Ausführungsform

Das Ein- und Ausgabegerät 1, insbesondere eine Datenverarbeitungseinrichtung 7 des Ein- und Ausgabegeräts 1, kann den Eingabeinhalt an wenigstens zwei verschiedene Servereinheiten 8 senden, wie in Fig. 2A und Fig. 2B gezeigt ist.

Unter einer "Datenverarbeitungseinrichtung" ist im Rahmen der vorliegenden Erfindung eine Vorrichtung zur automatischen Verarbeitung und zum automatischen Übertragen und/oder Senden von Daten, insbesondere mithilfe eines Programmcodes, zu verstehen.

Die Datenverarbeitungseinrichtung 7 kann insbesondere einen Prozessor, Speicher, eine interne und/oder externe Datenbank und/oder eine Kommunikationseinrichtung zur Verbindung mit dem Internet, anderen Computern und/oder wenigstens einen Server aufweisen.

Das Ein- und Ausgabegerät 1 kann den Eingabeinhalt unmittelbar an die Servereinheiten 8 senden, wodurch eine direkte Kommunikation zwischen dem Ein- und Ausgabegerät 1 und den Servereinheiten 8 erzielt wird. Ein entsprechend ausgebildetes System 6 ist in Fig. 2A gezeigt.

Alternativ ist es auch möglich, dass das System 6 eine Vermittlereinheit 9 aufweist, wie Fig. 2B zeigt. Die Vermittlereinheit 9 ist bezogen auf den Datenfluss vorzugsweise zwischen dem Ein- und Ausgabegerät 1 sowie den Servereinheiten 8 angeordnet.

In der in Fig. 2B gezeigten und insoweit bevorzugten Ausführungsform wird die Eingabe des Nutzers über die Vermittlereinheit 9 an die Servereinheiten 8 gesendet. Hierzu kann die Eingabe von dem Ein- und Ausgabegerät 1 zunächst an die Vermittlereinheit 9 und von der Vermittlereinheit 9 an die Servereinheiten 8 gesendet werden. Da das Ein- und Ausgabegerät 1 in der in Fig. 2B gezeigten Ausführungsform lediglich eine Verbindung - nämlich zur Vermittlereinheit 9 - aufweist, kann die Performance des Systems 6 insgesamt, insbesondere des Ein- und Ausgabegeräts 1, verbessert werden. Auch ist es möglich, die technischen Anforderungen an das Ein- und Ausgabegerät 1 bei gleicher Leistung und/oder Performance zu verringern.

Unter dem Begriff "Performance" ist vorliegend die Leistungsfähigkeit des Netzwerks und/oder wenigstens einer Komponente des Netzwerks zu verstehen.

Die Servereinheiten 8 sind vorzugsweise dazu ausgebildet, den Eingabeinhalt zu analysieren und auf der Analyse basierend einen auszusprechenden Inhalt, insbesondere Text, zu erzeugen.

Unter dem Begriff "Inhalt" ist im Rahmen der vorliegenden Erfindung eine Information zu verstehen, die akustisch und/oder visuell darstellbar ist. So kann es sich bei dem Inhalt beispielsweise um gesprochenen Text, Töne, Laute oder dergleichen handeln.

Jeder Servereinheit 8 ist vorzugsweise eine Sprache und/oder ein Sprachmodul in einer Sprache zugeordnet. Jede Servereinheit 8 ist dann insbesondere dazu ausgebildet, eine Sprache zu verstehen und/oder in einer Sprache zu kommunizieren. Insbesondere ist jede Servereinheit 8 dazu ausgebildet, den Eingabeinhalt in der ihr jeweils zugeordneten Sprache zu analysieren und basierend auf der Analyse einen auszusprechenden Inhalt in derselben Sprache zu erzeugen.

Bei der Servereinheit 8 kann es sich um einen Websocket-Server oder einen Webserver, der Websockets unterstützt, handeln.

Unter dem Begriff "Websocket-Server" ist im Rahmen der vorliegenden Erfindung ein Server zu verstehen, der mittels des Websocket-Protokolls kommunizieren kann.

Unter dem Begriff "Websocket-Protokoll" ist im Rahmen der vorliegenden Erfindung ein auf TCP basierendes Netzwerkprotokoll zu verstehen, das entworfen wurde, um eine bidirektionale Verbindung V zwischen einer Webanwendung und/oder dem Ein- und Ausgabegerät 1 und einem Websocket-Server bzw. einem Webserver, der auch Websockets unterstützt, herzustellen.

In der in Fig. 2A gezeigten Ausführungsform ist vorzugsweise vorgesehen, dass zwischen dem Ein- und Ausgabegerät 1 und den Servereinheiten 8 jeweils eine Websocketverbindung, also eine bidirektionale Verbindung V, ausgebildet ist.

Eine Websocketverbindung bietet den Vorteil, dass Daten gesendet werden, sobald sie verfügbar sind. Eine Anforderung von Daten ist insbesondere nicht notwendig. Die Websocketverbindung kann als dauerhafte Verbindung ausgebildet sein, die bidirektionale Nachrichten mit geringer Latenz ermöglicht. Mit Websocketverbindungen kann eine besonders geringe Latenz bei einem verringerten Overhead des Netzwerkverkehrs erreicht werden.

Unter dem Begriff "Latenz" ist vorliegend vorzugsweise die Verzögerung bei der Netzwerkkommunikation und/oder bei der Kommunikation einzelner Komponenten des Netzwerks zu verstehen.

Unter dem Begriff "Overhead" sind vorliegend vorzugsweise Daten zu verstehen, die nicht zu den versendeten Nutzdaten gehören, sondern als Zusatzinformationen zur Übermittlung oder Speicherung benötigt werden. Dazu zählt beispielsweise ein vom Empfänger zum Sender zurückgeschickter Überprüfungscode, um die Korrektheit der übertragenen Daten sicherzustellen.

In der in Fig. 2B gezeigten Ausführungsform ist vorzugsweise vorgesehen, dass zwischen dem Ein- und Ausgabegerät 1 und der Vermittlereinheit 9 eine Websocketverbindung ausgebildet ist. Vorzugsweise ist zwischen der Vermittlereinheit 9 und den Servereinheiten 8 jeweils eine Websocketverbindung ausgebildet.

Die Servereinheiten 8 bestimmen bevorzugt jeweils eine Übereinstimmung mit der jeweils zugeordneten Sprache. Die Bestimmungen der Übereinstimmung wird vorzugsweise gleichzeitig von den Servereinheiten 8 durchgeführt.

Die Servereinheit 8 mit der höchsten Übereinstimmung mit der ihr zugeordneten Sprache kann dann zur Erzeugung eines auszusprechenden Inhalts als Reaktion auf die Eingabe durch den Nutzer als Antwortservereinheit 10 bestimmt werden.

Der Vergleich der Übereinstimmungen und/oder die Bestimmung der Antwortservereinheit 10 kann mittels einer Auswerteinheit 11 erfolgen. Die Auswerteinheit 11 kann als separate Einheit oder als Bestandteil wenigstens einer Servereinheit 8 ausgebildet sein.

Der erzeugte auszusprechende Inhalt kann dann an das Ein- und Ausgabegerät 1 gesendet und durch das Ein- und Ausgabegerät 1 ausgegeben werden.

Der auszusprechende Inhalt kann in der in Fig. 2A gezeigten Ausführungsform unmittelbar von der, in Fig. 2A oben gezeigten, Antwortservereinheit 10 an das Ein- und Ausgabegerät 1 gesendet werden, insbesondere über die Websocketverbindung. Alternativ kann in der in Fig. 2B gezeigten Ausführungsform der auszusprechende Inhalt von der, in Fig. 2B in der Mitte gezeigten, Antwortservereinheit 10 über die Vermittlereinheit 9 mittelbar an das Ein- und Ausgabegerät 1 gesendet werden.

Das Ein- und Ausgabegerät 1 weist vorzugsweise eine akustische Ausgabeeinrichtung 12 zur akustischen Ausgabe des Inhalts auf. Bei der akustischen Ausgabeeinrichtung 12 kann es sich beispielsweise um einen Lautsprecher handeln, der integraler Bestandteil des Ein- und Ausgabegeräts 1 ist oder als separates Teil/Gerät des Ein- und Ausgabegeräts 1 ausgebildet und/oder mit dem Eingabegerät 4 kombiniert ist.

Über die Ausgabeeinrichtung 12 kann eine akustische Ausgabe des zuvor erzeugten Inhalts 8 durch den Avatar 3 erfolgen. Gleichzeitig kann die visuelle Ausgabe durch den Avatar 3 über den Bildschirm 2 erfolgen. Auf diese Weise kann eine Kommunikation zwischen dem Nutzer 5 und dem Avatar 3 ermöglicht werden.

Zur Unterstützung der akustischen Ausgabe des Inhalts ist das System 6 vorzugsweise dazu ausgebildet, die Lippenbewegungen des Avatars 3 und die akustische Ausgabe des Inhalts zu synchronisieren.

Unter dem Begriff "Lippenbewegung" ist im Rahmen der vorliegenden Erfindung die Lippenbewegung und vorzugsweise die Mimik und/oder der Ausdruck des Gesichts des Avatars 3 bei der Aussprache des Inhalts zu verstehen.

Der Nutzer 5 hört somit die akustische Ausgabe durch den Avatar 3 und sieht auf dem Bildschirm 2 eine zu der akustischen Ausgabe synchron laufende Lippenbewegung des Avatars 3. Auf diese Weise kann das Verständnis des Nutzers 5 erhöht und die Kommunikation zwischen dem Nutzer 5 und dem Avatar 3 verbessert werden. Eine solche Kommunikation wird von Nutzern 5 als besonders natürlich wahrgenommen.

Unter dem Begriff "natürlich" ist vorliegend in Bezug auf die Kommunikation zu verstehen, dass das Gespräch für den Nutzer identisch oder vergleichbar mit einer Kommunikation mit einer natürlichen Person ist.

Die Erzeugung der Lippenbewegung und die Synchronisierung der Lippenbewegungen mit dem auszusprechenden Inhalt kann mittels der Antwortservereinheit 10, der Vermittlereinheit 9 und/oder des Ein- und Ausgabegeräts 1 erfolgen.

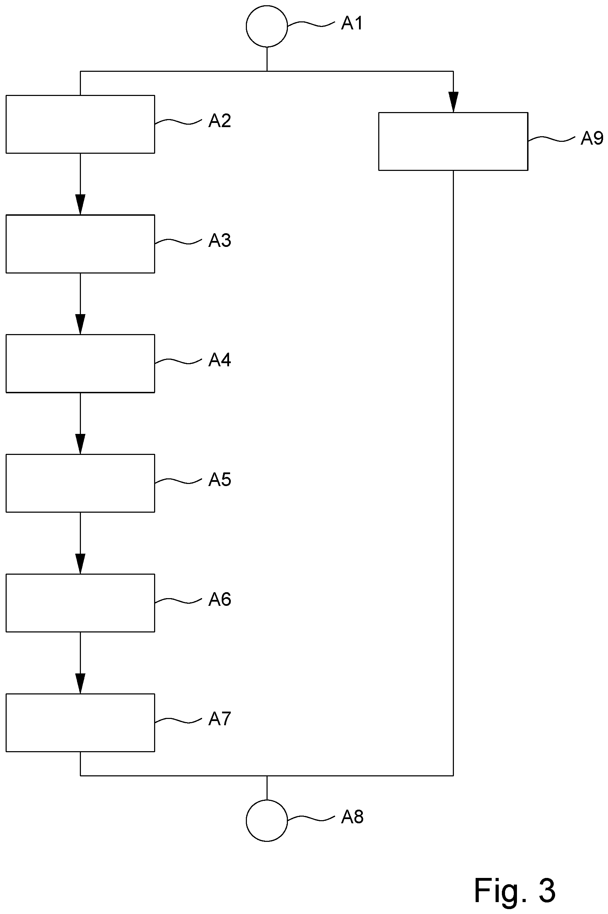

Fig. 3 zeigt ein schematisches Ablaufdiagramm eines vorschlagsgemäßen Verfahrens zur akustischen und insbesondere visuellen Ausgabe eines auszusprechenden Inhalts durch einen Avatar 3 bzw. einzelner Verfahrensschritte des vorschlagsgemäßen Verfahrens.

Das Verfahren ist vorzugsweise mehrstufig bzw. mehrschrittig ausgebildet. Insbesondere weist das Verfahren mehrere Verfahrensschritte auf, wobei die einzelnen Verfahrensschritte grundsätzlich unabhängig voneinander und in beliebiger Reihenfolge durchgeführt werden können, sofern im Folgenden nicht anders erläutert.

Das vorschlagsgemäße Verfahren wird vorzugsweise mittels des Systems 6 zur Datenverarbeitung, insbesondere mittels des Ein- und Ausgabegeräts 1, der Eingabeeinrichtung 4, des Bildschirms 2, der Servereinheiten 8, der Auswerteinheit 11 und/oder der Ausgabeeinrichtung 12 und/oder gegebenenfalls der Vermittlereinheit 9 durchgeführt.

Das System 6 zur Datenverarbeitung ist vorzugsweise zur Ausführung des hierin beschriebenen Verfahrens bzw. einzelner oder aller Verfahrensschritte ausgebildet.

Vorzugsweise sind die Befehle bzw. ist der Algorithmus zur Ausführung des vorschlagsgemäßen Verfahrens bzw. einzelner Verfahrensschritte des vorschlagsgemäßen Verfahrens elektronisch in einem (Daten-) Speicher des Systems 6, insbesondere der Datenverarbeitungseinrichtung 7, der Servereinheiten 8 und/oder der Auswerteinheit 11 und/oder gegebenenfalls der Vermittlereinheit 9 gespeichert.

Es ist insbesondere möglich, dass ein oder mehrere Verfahrensschritte mittels einer (externen) Einrichtung bzw. eines (externen) Gerätes, insbesondere mittels einer Servereinheit 8, durchgeführt werden und/oder einzelne oder mehrere Befehle zur Ausführung des Verfahrens bzw. einzelner Verfahrensschritte dort gespeichert sind.

Das vorschlagsgemäße Verfahren beinhaltet vorzugsweise einen oder mehrere Verfahrensschritte und/oder ein Programm, um die Ausgabe eines auszusprechenden Inhalts durch den Avatar 3 in verschiedenen Sprachen während der laufenden Kommunikation zu ermöglichen.

Das vorschlagsgemäße Verfahren zeichnet sich dadurch aus, dass die Eingabe des Nutzers 5, insbesondere gleichzeitig, an wenigstens zwei voneinander unabhängige Servereinheiten 8 gesendet wird, wobei von jeder Servereinheit 8, insbesondere gleichzeitig, eine Übereinstimmung der Eingabe mit jeweils einer der Servereinheit 8 zugeordneten Sprache bestimmt wird. Es ist dann in besonders schneller und effizienter Weise möglich, die Sprache, in der die Eingabe erfolgt ist, zu bestimmen und den auszusprechenden Inhalt in der bestimmten Sprache zu erzeugen.

Der Avatar 3 ist dann insbesondere in der Lage, mittels der voneinander unabhängigen Servereinheiten 8 auf unterschiedlichen Sprachen zu kommunizieren. Insbesondere ist es für einen Sprachwechsel dann nicht notwendig, eine manuelle und/oder spezielle vorgegebene Umstellung, beispielsweise in einem Programmmenü vorzunehmen. Für einen Wechsel der Sprache kann der Nutzer in besonders einfacher Weise die Eingabe in einer anderen Sprache durchführen. Das System 6 kann basierend auf der Eingabe die Sprache bestimmen und den auszusprechenden Inhalt in der entsprechenden Sprache erzeugen.

Der Erfindung liegt die Erkenntnis zugrunde, dass auf eine aktive Auswahl der Sprache für der Kommunikation, insbesondere mittels eines der Kommunikation vorgelagerten Menüs, verzichtet werden kann, wenn das Ein- und Ausgabegerät 1 mit wenigstens zwei Servereinheiten 8, die jeweils zur Erzeugung eines auszusprechenden Inhalts ausgebildet sind, verbunden ist. Es ist dann, bei zwei Servereinheiten 8 möglich, während der Kommunikation beliebig zwischen den beiden Sprachen zu wechsein.

Je nachdem wie viele Sprachen zur Verfügung stehen sollen, können entsprechend viele Verbindungen zu entsprechend ausgebildeten Servereinheiten 8 bereitgestellt werden. Auf diese Weise kann das System 6 verschiedene Sprachen verstehen und in den jeweiligen Sprachen antworten. Insbesondere kann der Nutzer 5 durch die Sprache der Eingabe die Sprache der Ausgabe des auszusprechenden Inhalts festlegen, ohne eine aktive Auswahl, beispielsweise mittels eines Menüs, tätigen zu müssen.

Das Verfahren wird vorzugsweise durch den Nutzer 5 gestartet, beispielsweise durch Öffnen eines entsprechenden Programms und/oder einer entsprechenden Internetseite und/oder Eingabe eines entsprechenden Befehls. Beispielsweise kann das Öffnen eines entsprechenden Programms oder die Eingabe eines entsprechenden Befehls durch den Nutzer 5 mittels der Eingabeeinrichtung 4 erfolgen, vorzugsweise in einem ersten Verfahrensschritt/Vorgang A1.

Es ist auch möglich, dass das Verfahren durch die Aussprache eines vorgegebenen Befehls durch den Nutzer 5 gestartet wird, beispielsweise durch die Aussprache von "Hallo Avatar" oder einen anderen Startbefehl.

Es ist auch möglich, dass das System 6 und/oder das Ein- und Ausgabegerät 1 erkennt, wenn sich ein potentieller Nutzer 5 dem Ein- und Ausgabegerät 1 nähert. Der Avatar 3 kann dann den Nutzer 5 von sich aus ansprechen und/oder ein Gespräch oder eine Kommunikation starten.

Der erste Verfahrensschritt/Vorgang A1 kann eine Begrüßung durch den Avatar 3, insbesondere eine an die jeweilige Situation angepasste Begrüßung, enthalten bzw. aufweisen. So kann beispielsweise die Begrüßung durch den Avatar 3 abhängig von der Tages- und/oder Jahreszeit erfolgen. Bei der Begrüßung können auch andere Einflüsse berücksichtigt werden.

Der zweite Verfahrensschritt A2 weist vorzugsweise die Eingabe durch den Nutzer 5 und die Erfassung des, insbesondere akustischen, Eingabeinhalts auf. Die Erfassung erfolgt insbesondere mittels der Eingabeeinrichtung 4.

Während der Eingabe des Eingabeinhalts kann eine Vorverarbeitung erfolgen, um die Qualität der Erfassung zu verbessern und/oder die Erkennungsgenauigkeit des Eingabeinhalts zu erhöhen. Dabei können beispielsweise Hintergrundgeräusche und Störungen eliminiert werden. Alternativ oder zusätzlich können bestimmte Frequenzen gefiltert werden, um irrelevante Frequenzen zu entfernen. Es ist zusätzlich oder alternativ auch möglich, den Lautstärkepegel des Tons zu standardisieren. Es ist zudem möglich, lediglich einzelne oder alle vorgenannten Vorverarbeitungen durchzuführen.

Die Eingabe des Nutzers 5 wird vorzugsweise über jeweils eine bidirektionale Verbindung V an wenigstens zwei Servereinheiten 8 gesendet. Insbesondere kann das Übersenden der Eingabe des Nutzers 5 an die Servereinheiten 8 in Echtzeit erfolgen. Es ist auch möglich, dass die Eingabe des Nutzers 5 zunächst aufgenommen und/oder gespeichert und anschließend an die Servereinheiten 8 gesendet wird.

Die Servereinheiten 8 sind vorzugsweise dazu ausgebildet, den Eingabeinhalt der Eingabe zu analysieren und auf der Analyse basierend einen auszusprechenden Inhalt, insbesondere Text, zu erzeugen, wie nachfolgend noch erläutert wird.

Jeder Servereinheit 8 ist jeweils eine von den anderen Servereinheiten 8 unterschiedliche Sprache zugeordnet. Die Anzahl der Servereinheiten 8 entspricht somit vorzugsweise der Anzahl der Sprachen, in denen der Avatar 3 kommunizieren kann.

Unter dem Begriff "Sprache" sind im Rahmen der vorliegenden Erfindung nicht nur Landes- oder Einzelsprachen, sondern auch Dialekte, wie beispielsweise kölsch, bayrisch oder sächsisch, zu verstehen.

In Fig. 2A und Fig. 2B ist beispielsweise jeweils ein System 6 mit insgesamt drei Servereinheiten 8 gezeigt. Der Avatar 3 dieser Systeme 6 ist somit in der Lage, in jeweils drei Sprachen zu kommunizieren.

Der Avatar 3 ist durch das System 6 in der Lage, während der Kommunikation die Sprache beliebig zu wechseln, wie nachfolgend noch erläutert wird.

In einem weiteren/dritten Verfahrensschritt A3 bestimmt jede Servereinheit 8 eine Übereinstimmung der Eingabe mit der ihr jeweils zugeordneten Sprache. Die Bestimmung kann in Echtzeit oder in Quasi-Echtzeit erfolgen, so dass unmittelbar oder innerhalb von weniger als 0,2 s, vorzugsweise von weniger als 0,1 s, weiter vorzugsweise von weniger als 0,05 s, nach Beendigung der Eingabe die Bestimmung der Übereinstimmung vorliegt und/oder abgeschlossen ist.

Unter dem Begriff "Übereinstimmung" ist vorliegend ein, insbesondere relativer, Wert, eine, insbesondere relative, Angabe, eine, insbesondere relative, Bewertung oder dergleichen zu verstehen. So kann die Übereinstimmung beispielsweise durch einen Wahrscheinlichkeitswert, eine Prozentangabe oder eine Punktwertung gebildet sein, wobei eine hohe Übereinstimmung einem hohen Wahrscheinlichkeitswert, einer hohen Prozentangabe oder einer hohen Punktwertung entspricht.

Die Bestimmung der Übereinstimmung mit der vorgegebenen Sprache kann durch eine phonetische Analyse der Eingabe erfolgen. So kann beispielsweise nach phonetischen Übereinstimmungen, Ähnlichkeiten und/oder Mustern gesucht werden. Die Übereinstimmungen, Ähnlichkeiten und/oder Muster können dann mit in einer Datenbank gespeicherten, insbesondere phonetischen, Daten abgeglichen werden.

Erfolgt die Eingabe des Nutzers 5 beispielsweise auf deutsch, wobei einer Servereinheit 8 die deutsche Sprache, einer weiteren Servereinheit 8 die englische Sprache und einer weiteren Servereinheit 8 die französische Sprache zugeordnet ist, so kann die Servereinheit 8, der die deutsche Sprache zugeordnet ist, eine hohe Prozentangabe von beispielsweise 95% als Übereinstimmung bestimmen. Die Servereinheit 8, der die englische Sprache zugeordnet ist, kann eine niedrigere Prozentangabe von beispielsweise 7 % und die Servereinheit 8, der die französische Sprache zugeordnet ist, eine ebenfalls niedrigere Prozentangabe von beispielsweise 5 % als Übereinstimmung bestimmen.

Insbesondere kann die Bestimmung der Übereinstimmung mit der vorgegebenen Sprache zumindest teilweise während des zweiten Verfahrensschritt A2 stattfinden. Die Verfahrensschritte A3 und A2 können somit zumindest abschnittsweise zeitgleich ablaufen.

In einem weiteren/vierten Verfahrensschritt A4 können die von den Servereinheiten 8 bestimmten Übereinstimmungen miteinander verglichen werden. Hierzu können die Servereinheiten 8 unmittelbar miteinander kommunizieren.

Alternativ ist es auch möglich, dass die Servereinheiten 8 die Übereinstimmungen jeweils an eine, insbesondere gemeinsame, Auswerteinheit 11 senden. Die Auswerteinheit 11 kann unabhängig von den Servereinheiten 8 ausgebildet oder Bestandteil wenigstens einer Servereinheit 8 sein. Die Auswerteinheit 11 ist vorzugsweise dazu ausgebildet, die Übereinstimmungen zu vergleichen.

Die Servereinheit 8 mit der größten Übereinstimmung mit der ihr zugeordneten Sprache wird vorzugsweise als Antwortservereinheit 10 ausgewählt oder bestimmt. Im oben genannten Beispiel weist die Servereinheit 8 mit der Prozentangabe von 95 % die höchste Übereinstimmung auf, so dass diese Servereinheit 8, der die deutsche Sprache zugeordnet ist, als Antwortservereinheit 10 bestimmt wird.

Sofern zwei oder mehr Servereinheiten 8 zumindest im Wesentlichen eine gleichgroße Übereinstimmung aufweisen, kann eine Servereinheit davon als Antwortservereinheit in Abhängigkeit eines zusätzlichen Einflussfaktors bestimmt werden. So kann der Einflussfaktor beispielsweise die Sprache der vorhergehenden Eingabe und/oder des vorhergehenden auszusprechenden Inhalts, die zu erwartende Sprache an dem Standort und/oder eine Wahrscheinlichkeit, das ein Nutzer einer Sprache mächtig ist, und/oder weitere Faktoren berücksichtigen.

Die Auswahl oder Bestimmung der Antwortservereinheit 10 kann durch die Servereinheiten 8 selbst oder durch die Auswerteinheit 11 erfolgen.

In Fig. 2A ist beispielsweise die obere Servereinheit 8 als Antwortservereinheit 10 bestimmt worden. Demgegenüber zeigt Fig. 2B eine andere Konstellation, in der die mittlere Servereinheit 8 als Antwortservereinheit 10 bestimmt worden ist.

In einem weiteren/fünften Verfahrensschritt A5 wird vorzugsweise die Eingabe bzw. der Eingabeinhalt des Nutzers 5 analysiert. Die Analyse kann dabei insbesondere gleichzeitig mit der im dritten Verfahrensschritt A3 stattfindenden Bestimmung der Übereinstimmung der Eingabe mit der der Servereinheit 8 zugeordneten Sprache erfolgen.

Insbesondere können die Verfahrensschritte A2, A3, A4 und/oder A5 zumindest teilweise parallel zueinander ablaufen.

Somit kann der fünfte Verfahrensschritt A5 zumindest teilweise von mehreren Servereinheiten 8 gleichzeitig durchgeführt werden. Sobald die Antwortservereinheit 10 bestimmt ist, kann der fünfte Verfahrensschritt A5 ausschließlich auf der Antwortservereinheit 10 weitergeführt werden. Durch die Bestimmung der Antwortservereinheit 10 kann zur Erzeugung des auszusprechenden Inhalts dann lediglich die Analyse der Eingabe verwendet werden, die durch die Antwortservereinheit 10 erfolgt ist. Die gegebenenfalls von anderen Servereinheiten 8 erzeugten inhaltlichen Analysen der Eingabe in anderen Sprachen, werden somit bei der nachfolgenden Erzeugung des auszusprechenden Inhalts nicht berücksichtigt.

Vorzugsweise erfolgt die vollständige Analyse der Eingabe bzw. des Eingabeinhalts ausschließlich durch die Antwortservereinheit 10. Auf diese Weise wird lediglich die Servereinheit 8 zur vollständigen Analyse verwendet, welche die höchste Übereinstimmung mit der Sprache des Nutzers 5 aufweist. Die anderen Servereinheiten 8 werden dann nicht verwendet, wodurch ein besonders effizientes Verfahren erreicht werden kann.

Im fünften Verfahrensschritt A5 kann nach oder während der Erfassung der Eingabe bzw. des Eingabeinhalts und/oder nach Speicherung der Eingabe bzw. des Eingabeinhalts (zweiter Verfahrensschritt A2) - zusätzlich oder alternativ zur Vorverarbeitung in Verfahrensschritt A2 - eine weitere Verarbeitung erfolgen, um die Qualität des erfassten Eingabeinhalts zu verbessern und die Erkennungsgenauigkeit des erfassten Eingabeinhalts zu erhöhen. Dabei können beispielsweise Hintergrundgeräusche und Störungen eliminiert werden. Alternativ oder zusätzlich können bestimmte Frequenzen gefiltert werden, um irrelevante Frequenzen zu eliminieren. Es ist zusätzlich oder alternativ auch möglich, den Lautstärkepegel des Tons zu standardisieren. Es ist zudem möglich, lediglich einzelne oder alle vorgenannten Verarbeitungen durchzuführen, beispielsweise nacheinander, parallel und/oder iterativ.

Darüber hinaus kann im fünften Verfahrensschritt A5 nach phonetischen Übereinstimmungen und Mustern gesucht werden. Die Übereinstimmungen und Muster können dann mit in einer Datenbank gespeicherten Mustern abgeglichen werden, um wenigstens einzelne Bestandteile des Eingabeinhalts zu identifizieren. Bei der Datenbank kann es sich um eine interne und/oder externe Datenbank, insbesondere einer cloudbasierten Datenbank, handeln. Die Datenbank kann als Speicher, insbesondere Festplatte, ausgebildet sein. Die Datenbank kann als Bestandteil der Servereinheit 8 bzw. der Antwortservereinheit 10 sein.

Im fünften Verfahrensschritt A5 kann der insbesondere gesprochene Eingabeinhalt in, insbesondere maschinenlesbaren, Text und/oder Code umgewandelt werden. Die Umwandlung kann mittels einer Voice2Text-Anwendung erfolgen. Bei der Voice2Text-Anwendung kann es sich insbesondere um eine Spracherkennung handeln, die gesprochenen Text transkribiert.

Vorzugsweise erfolgt die, insbesondere vollständige, Umwandlung des Eingabeinhalts ausschließlich durch die Antwortservereinheit 10.

Es ist auch möglich, dass der fünfte Verfahrensschritt A5 dazu ausgebildet ist, durch maschinelles Lernen und/oder künstliche Intelligenz die Spracherkennung zu unterstützen und/oder die Genauigkeit und Anpassungsfähigkeit der Bearbeitung zu verbessern.

Nachfolgend wird vorzugsweise der logische Inhalt bzw. die Bedeutung des insbesondere transkribierten Eingabeinhalts bzw. der Eingabetext analysiert. Dazu wird vorzugsweise ein Large Language Modul (LLM) verwendet. Unter dem Begriff "Large Language Modul" ist vorliegend ein generatives Sprachmodell für Texte bzw. textbasierte Inhalte zu verstehen. Large Language Module verwenden künstliche Intelligenz, künstliche neuronale Netzwerke und/oder Deep Learning, um natürliche Sprache zu verarbeiten, zu verstehen und/oder gegebenenfalls zu generieren. Entsprechende Sprachmodelle werden verwendet, um komplexe Texte, Fragen und/oder Anweisungen zu verstehen.

Hier und vorzugsweise wird der Eingabeinhalt bzw. der Eingabetext anhand von Ausdrücken, Synonymen, Wörtern, Satzbestandteilen und/oder Sätzen mittels des Large Language Moduls analysiert. Mithilfe des Large Language Moduls kann somit der logische Inhalt bzw. die Bedeutung des Eingabeinhalts des Nutzers 5 erfasst bzw. verstanden werden.

Der fünfte Verfahrensschritt A5 wird vorzugsweise lediglich von der Antwortservereinheit 10, insbesondere vollständig, durchgeführt.

Nachfolgend wird in einem weiteren/sechsten Verfahrensschritt A6 vorzugsweise eine Reaktion bzw. Antwort auf den Eingabeinhalt des Nutzers 5 generiert.

Hierzu kann die Servereinheit 8 bzw. die Antwortservereinheit 10 mehrere hinterlegte vorgegebene Inhaltsbausteine aufweisen. Bei den vorgegebenen Inhaltsbausteinen kann es sich um Antworten und/oder Informationen zu verschiedenen Themen handeln.

Bei den Inhaltsbausteinen kann es sich um, beispielsweise durch Menschen, geprüfte und damit objektiv richtige Informationen bzw. Reaktionen handeln. Auf diese Weise können nur Informationen bzw. Reaktionen ausgegeben werden, die auf objektiv richtigen Inhaltsbausteinen basieren. Es kann somit verhindert werden, dass erfundene und/oder nicht objektiv richtige Informationen bzw. Reaktionen durch den Avatar 3 bzw. das System 6 ausgegeben werden.

Ein vorgegebener Inhaltsbaustein oder mehrere vorgegebene Inhaltsbausteine können ausgewählt bzw. identifiziert werden. Die Auswahl des vorgegebenen Inhaltsbausteins kann dabei vorzugsweise anhand der Analyse des Eingabeinhalts bzw. basierend auf der Analyse durch das Large Language Model erfolgen.

Um auch komplexe Fragen beantworten zu können bzw. auf komplexe Eingabeinhalte adäquat reagieren zu können, können verschiedene Inhaltsbausteine verwendet werden, beispielsweise wenn der Eingabeinhalt mehrere Fragen enthält oder zur Beantwortung des Eingabeinhalts bzw. als Reaktion auf den Eingabeinhalt mehrere Inhaltsbausteine erforderlich sein.

Anschließend können die ausgewählten vorgegebenen Inhaltsbausteine bzw. der ausgewählte vorgegebene Inhaltsbaustein zu einem auszusprechenden Inhalt verarbeitet werden bzw. wird aus dem ausgewählten vorgegebenen Inhaltsbaustein bzw. den ausgewählten vorgegebenen Inhaltsbausteinen der auszusprechende Inhalt formuliert. Bei dem auszusprechenden Inhalt kann es sich um eine Antwort auf den Eingabeinhalt bzw. Reaktion auf den Eingabeinhalt handeln. Alternativ oder zusätzlich kann der auszusprechende Inhalt einen Teil einer Antwort auf den Eingabeinhalt bzw. einen Teil einer Reaktion auf den Eingabeinhalt aufweisen.

Werden mehrere vorgegebene Inhaltsbausteine ausgewählt, können diese einzeln weiterverarbeitet werden oder in einer an den Eingabeinhalt angepassten Reihenfolge zu einer logischen Informationseinheit zusammengefasst bzw. aneinander angeordnet werden, um den auszusprechenden Inhalt zu formulieren.

Alternativ oder zusätzlich ist es möglich, dass der auszusprechende Inhalt mittels eines Large Language Moduls erzeugt wird.

Der auszusprechende Inhalt wird somit vorzugsweise ausschließlich durch die Antwortservereinheit 10 erzeugt. Der auszusprechende Inhalt kann auf diese Weise in der Sprache erzeugt werden, in der auch die Eingabe durch den Nutzer erfolgt ist. Gleichzeitig kann eine besonders hohe Performance des Systems 6 erreicht werden.

Der sechste Verfahrensschritt A6 wird vorzugsweise lediglich von der Antwortservereinheit 10 durchgeführt.

Im Anschluss kann in einem weiteren/siebten Verfahrensschritt A7 eine zum auszusprechenden Inhalt synchrone Lippenbewegung simuliert und/oder berechnet werden. Auf diese Weise kann zu jedem auszusprechenden Inhalt, auch unabhängig von der verwendeten Sprache, eine synchrone Lippenbewegung erzeugt werden.

Alternativ oder zusätzlich ist es auch möglich, dass eine vorgegebene Lippenbewegungssequenz verwendet wird, um eine zum auszusprechenden Inhalt synchrone Lippenbewegung zu erzeugen. Es kann vorgesehen sein, dass eine vorgegebene Lippenbewegungssequenz zum auszusprechenden Inhalt abgespielt wird.

Insbesondere kann die vorgegebene Lippenbewegungssequenz aus einer Mehrzahl von vorgegebenen Lippenbewegungssequenzen ausgewählt werden. Auf diese Weise kann eine passende Lippenbewegungssequenz ausgewählt werden. Es ist insbesondere möglich, die vorgegebene Lippenbewegungssequenz in Abhängigkeit des auszusprechenden Inhalts auszuwählen. Auf diese Weise kann eine am besten zum auszusprechenden Inhalt passende Lippenbewegungssequenz ausgewählt werden.

Im Anschluss können im siebten Verfahrensschritt A7 die Lippenbewegungssequenz und der auszusprechende Inhalt zueinander synchronisiert werden, um die akustische Ausgabe des auszusprechenden Inhalts und die visuelle Ausgabe der Lippenbewegungssequenz synchron zueinander erfolgen zu lassen.

Daran anschließend kann in einem weiteren/achten Verfahrensschritt A8 die akustische und visuelle Ausgabe des auszusprechenden Inhalts erfolgen, also die synchron zueinander erfolgende akustische Ausgabe des Inhalts über die akustische Ausgabeeinrichtung 12 und die visuelle Ausgabe der Lippenbewegungssequenz über den Bildschirm 2.

Im Anschluss an den ersten Verfahrensschritt A1 wird in einem, insbesondere parallel zu den Verfahrensschritten A2-A7 laufenden, weiteren/neunten Verfahrensschritt A9 vorzugsweise über den Bildschirm 2 der Avatar 3 angezeigt bzw. dargestellt. Vorzugsweise wird der Avatar 3 im bewegten Zustand gezeigt, wobei eine natürlich zuhörende Bewegung des Avatars 3 dargestellt wird. Auf diese Weise wird von dem Avatar 3 ein natürliches Handeln bzw. eine natürliche Bewegung von einer real existierenden Person imitiert. Insbesondere führt der Avatar 3 während des dritten Verfahrensschritts A3 keine sprechenden oder sprechähnliche Lippenbewegungen durch.

Im Anschluss an die Ausgabe des auszusprechenden Inhalts durch den Avatar 3 im achten Verfahrensschritt A8 können die Verfahrensschritte A2 bis A8 und Verfahrensschritt A3 wiederholt werden.

Der Nutzer 5 kann in Reaktion auf den auszusprechenden bzw. den soeben ausgesprochenen Inhalt eine weitere Eingabe (zweiter Verfahrensschritt A2) tätigen. So kann der Nutzer 5 eine weitere Frage stellen oder eine Aussage als Reaktion auf den ausgesprochenen Inhalt des Avatars 3 tätigen.

Sofern der Nutzer 5 seine Eingabe in derselben Sprache wie die vorhergehende Eingabe tätigt, wird in Verfahrensschritt A4 dieselbe Servereinheit 8 als Antwortservereinheit 10 ausgewählt. Der auszusprechende Inhalt wird dann von derselben Antwortservereinheit 10 in derselben Sprache erzeugt.

Verwendet der Nutzer 5 bei dieser Eingabe jedoch eine andere Sprache als bei der vorhergehenden Eingabe, so wird in Verfahrensschritt A4 eine andere Servereinheit 8 als Antwortservereinheit 10 ausgewählt, in Fig. 2A beispielsweise die untere Servereinheit 8. Der auszusprechende Inhalt wird dann durch eine Servereinheit 8 bzw. Antwortservereinheit 10 erzeugt, der eine andere Sprache als bei der Erzeugung des vorhergehenden ausgesprochenen Inhalts zugeordnet ist.

Der Avatar 3 bzw. das System 6 ist bzw. sind somit dazu ausgebildet, in den durch die Servereinheiten 8 vorgegebenen Sprachen zu kommunizieren. Dabei kann der Avatar 3 jeden auszusprechenden Inhalt während einer laufenden Kommunikation in der Sprache ausgeben, in welcher der Nutzer 5 seine Eingabe getätigt hat. Auf diese Weise kann der Avatar 3 bzw. das System 6 während der laufenden Kommunikation mit dem Nutzer 5 die Sprache beliebig häufig wechseln. Für einen Sprachwechsel ist es lediglich erforderlich, dass die Eingabe durch den Nutzer 5 in einer anderen Sprache erfolgt.

Bei dem Avatar 3 kann es sich um die Darstellung einer existierenden, realen Person oder auch einer fiktiven Person handeln. So kann es sich bei dem Avatar beispielsweise um einen realen oder fiktiven Mitarbeiter einer Firma, beispielsweise einen Mitarbeiter eines öffentlichen Verkehrsunternehmens handeln. Der Nutzer 5 kann ein Kunde des Verkehrsunternehmens sein. Der Nutzer 5 kann mittels des Verfahrens und/oder des Systems 6 auf besonders einfache Weise Auskünfte zu Fahrplänen, Fahrkarten und Transportbedingungen erhalten und/oder relevante Fragen in kurzer Zeit beantwortet bekommen, ohne mit einem realen Mitarbeiter des Verkehrsunternehmens sprechen zu müssen. So kann beispielsweise eine Frage, wie der Nutzer 5 von einem Ort zum anderen kommt, oder welche Fahrkarte der Nutzer 5 benötigt, in besonders schneller und einfacher Weise richtig beantwortet werden. Es sind auch andere Anwendungsfälle bzw. Konstellationen des Avatars 3 und/oder Systems 6 möglich.

Das System 6 kann beispielsweise durch einen Computer, ein Mobiltelefon und/oder ein Tablet mit einem integrierten computerlesbaren Speicher bzw. Datenträger gebildet sein.

Ein weiterer Aspekt der vorliegenden Erfindung betrifft ein Computerprogramm, umfassend Befehle, die bei Ausführung des Computerprogramms durch einen Computer bzw. das erfindungsgemäße System 6 diesen bzw. dieses veranlassen, das vorschlagsgemäßes Verfahren auszuführen. Auf alle Ausführungen zum vorschlagsgemäßen Verfahren darf insoweit verwiesen werden. Insbesondere werden entsprechende Vorteile erzielt.

Ein weiterer Aspekt der vorliegenden Erfindung betrifft einen computerlesbaren Datenträger, auf dem das vorschlagsgemäße Computerprogramm gespeichert ist. Auf alle Ausführungen zum vorschlagsgemäßen Computerprogramm darf insoweit verwiesen werden. Insbesondere werden entsprechende Vorteile erzielt.

**Bezugszeichenliste:**

| | | | |
|---|---|---|---|
| 1 | Ein- und Ausgabegerät | 6 | System |
| 2 | Bildschirm | 7 | Datenverarbeitungseinrichtung |
| 3 | Avatar | 8 | Servereinheit |
| 4 | Eingabeeinrichtung | 9 | Vermittlereinheit |
| 4A | Tastatur | 10 | Antwortservereinheit |
| 4B | Maus | 11 | Auswerteinheit |
| 4C | Touchpad | 12 | Ausgabeeinrichtung |
| 4D | Kamera | | |
| 4E | Mikrofon | A1 - A9 | Verfahrensschritte |
| 5 | Nutzer | V | Bidirektionale Verbindung |

## Patentansprüche

1. Verfahren zur akustischen und insbesondere visuellen Ausgabe eines auszusprechenden Inhalts durch einen Avatar (3),
wobei eine Eingabe durch einen Nutzer (5) erfolgt,
wobei der auszusprechende Inhalt als Reaktion auf die Eingabe erzeugt und durch den Avatar (3) ausgegeben wird,
**dadurch gekennzeichnet,**
**dass** die Eingabe des Nutzers an wenigstens zwei voneinander unabhängige Servereinheiten (8) gesendet wird, wobei von jeder Servereinheit (8) eine Übereinstimmung der Eingabe mit jeweils einer der Servereinheit (8) zugeordneten Sprache bestimmt wird.

2. Verfahren nach Anspruch 1, **dadurch gekennzeichnet, dass** jeder Servereinheit jeweils eine von den anderen Servereinheiten (8) unterschiedliche Sprache zugeordnet ist.

3. Verfahren nach Anspruch 1 oder 2, **dadurch gekennzeichnet, dass** die Bestimmung der Übereinstimmung mit den jeweiligen Sprachen zumindest im Wesentlichen gleichzeitig erfolgt.

4. Verfahren nach einem der voranstehenden Ansprüche, **dadurch gekennzeichnet, dass** die Eingabe durch den Nutzer (5) und die Ausgabe des auszusprechenden Inhalts mittels eines Ein- und Ausgabegeräts (1) erfolgt.

5. Verfahren nach einem der voranstehenden Ansprüche, **dadurch gekennzeichnet, dass** die Übereinstimmungen mit den jeweiligen Sprachen miteinander verglichen werden und
die Servereinheit (8) mit der größten Übereinstimmung mit der ihr zugeordneten Sprache als Antwortservereinheit (10) bestimmt wird, und/oder
bei einer zumindest im Wesentlichen gleichgroßen Übereinstimmung bei wenigstens zwei Servereinheiten (8) eine Servereinheit (8) davon als Antwortservereinheit (10) in Abhängigkeit eines zusätzlichen Einflussfaktors bestimmt wird.

6. Verfahren nach Anspruch 5, **dadurch gekennzeichnet, dass** die Antwortservereinheit (10) dazu verwendet wird, den auszusprechenden Inhalt zu erzeugen.

7. Verfahren nach Anspruch 5 oder 6, **dadurch gekennzeichnet, dass** die Antwortservereinheit (10) dazu verwendet wird, den Eingabeinhalt der Eingabe des Nutzers (5) anhand von Wörtern, Ausdrücken und/oder Synonymen, insbesondere mittels eines Large Language Moduls, zu analysieren.

8. Verfahren nach einem der voranstehenden Ansprüche, **dadurch gekennzeichnet, dass** die Eingabe des Nutzers (5) über eine Vermittlereinheit (9) an die Servereinheiten (8) gesendet wird.

9. Verfahren nach Anspruch 4, einem der Ansprüche 5 bis 7 und Anspruch 8, **dadurch gekennzeichnet, dass** der auszusprechende Inhalt von der Antwortservereinheit (10) über die Vermittlereinheit (9) an das Ein- und Ausgabegerät (1) gesendet wird.

10. Verfahren nach Anspruch 9, **dadurch gekennzeichnet, dass** jeweils eine bidirektionale Verbindung (V) zwischen der Vermittlereinheit (9) und den Servereinheiten (8) aufgebaut und/oder aufrechterhalten wird, und/oder
dass eine bidirektionale Verbindung (V) zwischen dem Ein- und Ausgabegerät (1) und der Vermittlereinheit (9) aufgebaut und/oder aufrechterhalten wird.

11. Verfahren nach einem der Ansprüche 1 bis 7, **dadurch gekennzeichnet, dass** jeweils eine bidirektionale Verbindung (V) zwischen dem Ein- und Ausgabegerät (1) und den Servereinheiten (8) aufgebaut und/oder aufrechterhalten wird.

12. Verfahren nach einem der voranstehenden Ansprüche, **dadurch gekennzeichnet, dass** wenigstens ein Verfahrensschritt mittels eines Computers ausgeführt wird.

13. System zur Datenverarbeitung umfassend Mittel zur Ausführung eines Verfahrens nach einem der voranstehenden Ansprüche.

14. Computerprogramm, umfassend Befehle, die bei Ausführung des Computerprogramms durch einen Computer diesen veranlassen, ein Verfahren nach einem der Ansprüche 1 bis 12 auszuführen.

15. Computerlesbarer Datenträger, auf dem das Computerprogramm nach Anspruch 14 gespeichert ist.
